# EUROPEAN PATENT SPECIFICATION

(11) **EP 2 583 635 B1**
(45) Date of publication and mention of the grant of the patent: **16.12.2015**
(21) Application number: 11186068.0
(22) Date of filing: 21.10.2011
(51) Int. Cl.: A61C 5/06

(54) **Mixing and dispensing container**
Misch- und Ausgabebehälter
Récipient de mélange et de distribution

(43) Date of publication of application: 24.04.2013
(73) Proprietor: SDI Limited, Bayswater, VIC 3153 (AU)
(72) Inventor: Cheetham, Joshua James, Windsor, Victoria 3181 (AU)
(74) Representative: Minoja, Fabrizio

(56) References cited:
- DE-A1- 3 920 537
- US-A- 5 172 807
- US-A1- 2011 056 984

## Description

### FIELD OF THE INVENTION

The present invention relates to a mixing and dispensing container, according to the preamble of independent claim 1, as known from US 2011/056984 A1. The container of the invention has the features of the characterizing portion of claim 1. Preferred embodiments of the invention are disclosed in the dependent claims.

### SUMMARY OF THE INVENTION

In accordance with the present invention there is provided a dental container for mixing and dispensing of components of a dental mixture, having a main chamber, a dispensing nozzle, a liquid receptacle and a plunger, wherein the container comprises a body having a proximal end and a distal end, the main chamber being located adjacent the distal end of the body, the main chamber having a distal wall which is frangible and forms a seal and the dispensing nozzle being mounted at the distal end of the main chamber, the liquid receptacle being mounted within the proximal end of the body, and the plunger being sealingly mounted within an interior of the liquid receptacle, the liquid receptacle having an inner transverse wall which contains a weakened portion and wherein the plunger has a front face which is projection free, the liquid receptacle containing a liquid and the main chamber containing a powder, the arrangement being such that, in use, pressure is applied to the plunger to build up hydraulic pressure by means of the liquid on the inner transverse wall so as to break the weakened portion hydraulically and cause the liquid to enter the main chamber, and wherein a front portion of the liquid receptacle is arranged to be broken away from the remainder of the liquid receptacle by further depression of the plunger such that the plunger and the broken away portion of the liquid receptacle are able to traverse the entire length of the main chamber to cause dispensation of mixed dental material into the dispensing nozzle by application of hydraulic pressure on the distal wall of the main chamber so as to rupture the distal wall, and wherein the main chamber has a compression zone, the compression zone comprises a stepped region of reduced cross-sectional dimension such that limited resistance is imparted to movement of the front part of the liquid receptacle.

### DESCRIPTION OF THE DRAWINGS

The present invention will now be described, by way of example, with reference to the accompanying drawings, in which:
Figure 1 is a longitudinal sectional view of a container in accordance with the present invention in an initial condition;
Figure 2 is a longitudinal sectional view of the container of figure 1 in a partially activated condition;
Figure 3 is a longitudinal sectional view of the container of figure 1 in a further partially activated condition;
Figure 4 is a longitudinal sectional view of the container of figure 1 in a yet further partially activated condition;
Figure 5 is a longitudinal sectional view of the container of figure 1 in a fully activated condition;
Figure 6 is a longitudinal section of a body of the container of Figure 1; and
Figure 7 is a perspective sectional view of the body shown in Figure 6.

### DETAILED DESCRIPTION OF THE DRAWINGS

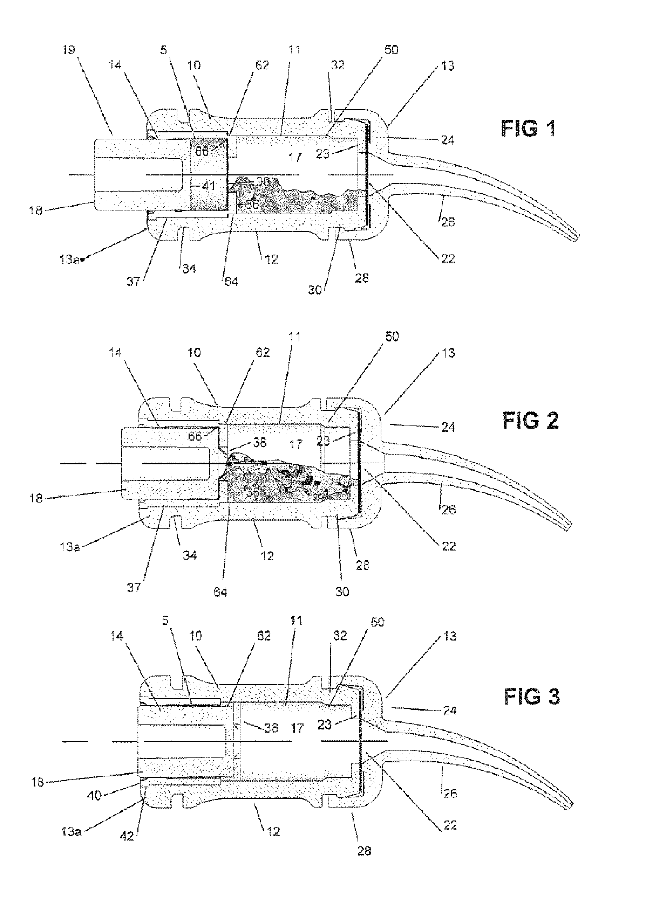

Referring to the figures 1 to 5, there is shown a container that is particularly envisaged to be used for dispensing of a dental material, in which a front part of a liquid receptacle breaks away from the liquid receptacle.

Referring to figure 1, there is shown a container 10 in an initial open or storage condition. The dental container 10 comprises a body 12 which has an internal surface 11 and is substantially cylindrical in cross section. Inside the body 12 is an open ended liquid receptacle 14, which, in use, contains a liquid (not shown). The receptacle 14 is sealed by a plunger 18 such as by seal means located on an external surface 19 of the plunger 18 or on an internal surface 15 of the liquid receptacle 14. The plunger 18 is located in an open end of the receptacle 14 as shown and has a front face 41.

The body 12 contains a main chamber 17 which is arranged, in use, to house an amount of powder (not shown). The body 12 is sealed at a distal end 13 by a frangible membrane 22 which is connected to the body 12 such as at an annular inwardly extending flange 23 by any convenient means such as an adhesive. The distal end 13 of the body 12 is opposed to a proximal end 13a thereof. The body 12 has attached thereto an end cap 24 which is connected to a nozzle 26 for dispensing material. The cap 24 is connected to the body 12 by means of a circumferential flange 28 which has an inwardly extending annular rib 30 at an end thereof remote from the nozzle 26. The rib 30 engages with a circumferential recess 32 in the body 12.

There is preferably provided a liquid tight seal (not shown) between the receptacle 14 and of the plunger 18. The seal may comprise annular ribs which extend outwardly from the receptacle 14 to the plunger 18 or vice versa.

Further, the body 12 is provided with an outward facing circumferential groove 34 adjacent the plunger 18. The groove 34 is arranged to engage with a dispensing apparatus (not shown) in use.

Still further, the liquid receptacle 14 has a side wall 37 and an inner wall 36 with a central weakened portion 38. The central weakened portion 38 is substantially thinner than the remainder of the inner wall 36 of the liquid receptacle 14. The inner wall 36 is, in the condition shown in figure 1, spaced from the front face 41 of the plunger 18.

Referring to figure 2, there is shown the container 10 in an activated position. The activated position is achieved through the plunger 18 being depressed. This action causes the plunger 18 to be moved so that an inner end thereof contacts the inner wall 36. This displaces the liquid so that the weakened portion 38 of the inner wall 36 breaks due to the hydraulic pressure applied to it by the liquid. The liquid is then forced into the main chamber 17 of the body 12 to contact the powder in the chamber 17. The container 10 may then placed into a known vibrating mixing device. The liquid and the powder are admixed and thereby form a paste in the chamber 17.

Referring to figure 3, there is shown the container 10 after the plunger 18 has been depressed and the liquid and the powder have been mixed to form a paste. The main chamber 17 of the body 12 now contains the paste. A front part of the liquid receptacle 14 including the inner wall 36 thereof have broken away from the remainder of the liquid receptacle 14. This is caused by force being transferred from the plunger 18 to the front part of the liquid receptacle 14 during dispensing of the paste with a dispensing apparatus. The remainder of the liquid receptacle 14 remains in place by virtue of an outwardly projecting annular step 40 on the liquid receptacle 14 engaging with an annular recess 42 in the inner surface 11 of the body 12 (see Figure 3).

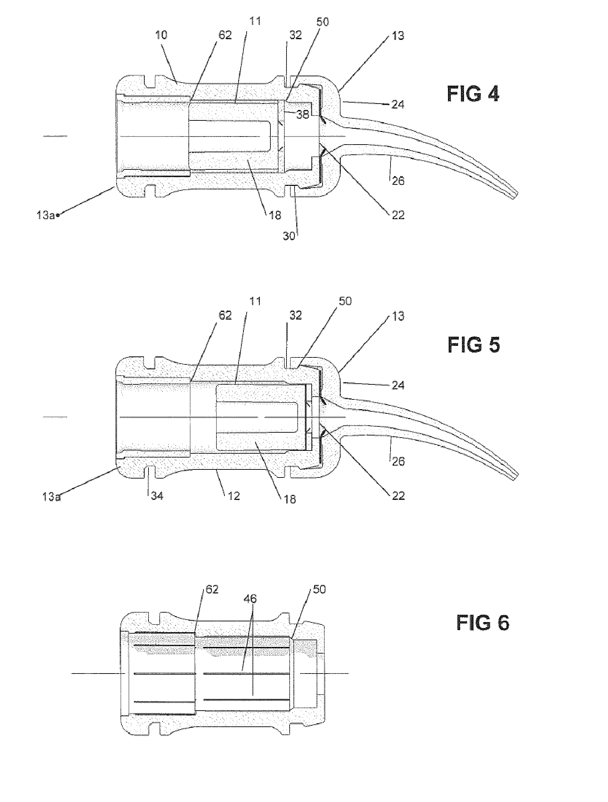

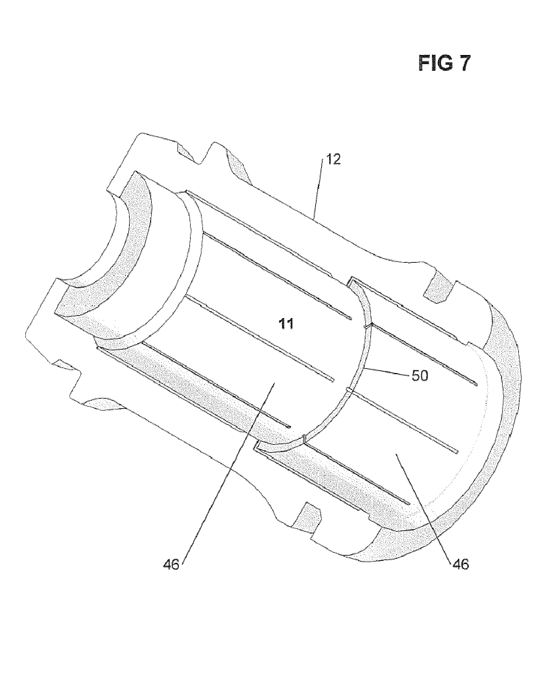

As shown in figure 4, the plunger 18 forces the front of the liquid receptacle 14 along the main chamber 17, where the front part of the liquid receptacle 14 acts as a seal and prevents paste from travelling rearwardly. Means such as slots located in the main body internal wall 11 may be provided to act as vent means for entrapped air to escape from the powder. The entrapped air may vent into a recess created from the separation of the front part of the liquid receptacle 14. The slots may take the form of a plurarity of elongated substantially parallel slots 46 which can be seen in figures 6 or 7, or other forms.

In figures 1 to 5 it can be seen that the internal surface of the container 10 of the body 12 has an internal step 62 such that the proximal end 13a of the body 12 is of larger dimension than the distal end 13.

Further, the side wall 37 of the receptacle is provided with an open sided annular recess 64 adjacent the inner wall 36. The recess 64 engages with the step 62 initially as shown in figure 1.

As can be seen the arrangement of the recess 64 and the step 62 enables the receptacle 14 to have a thin section 66 adjacent the inner wall 36. Thus, when force is applied to the plunger 18, as described hereinabove, the inner wall 36 breaks free of the receptacle 14 as shown in figure 3 at the thin section 66. This is because the section 66 is relatively weak compared to the inner wall 36. Also, because the distal end 13 of the chamber 17 is smaller in internal diameter than the proximal end portion 13a, all of the force applied to the plunger 18 is concentrated at the step 62 and the thin section 66. Thus, the inner wall 36 breaks away as described above, in use.

Referring to figure 5, there is shown the container 10 once substantially all of the paste has been dispensed. The front part of the liquid receptacle 14 has been displaced forward by the plunger 18 until it approaches the flange 23 of the body 12. As the plunger 18 is displaced forwardly hydraulic pressure on the paste bursts the membrane 22, allowing fluid communication between the main chamber 17 and the nozzle 26 and subsequent dispensing of the paste to the desired location.

It can be seen that the internal surface 11 has a compression zone comprising a stepped region 50 of reduced cross sectional dimension where limited resistance is imparted to movement of the front broken away part of the liquid receptacle 14. It is found that with low viscosity material in particular, the limited resistance imparted by the step 50 reduces the risk of uncontrolled extrusion of the low viscosity material.

The stepped region 50 slows down advancement of the front part of the liquid receptacle and the rate of extrusion of the material is correspondingly slowed down. Preferably, a proximal face of the stepped region 50 is tapered so as to provide a smooth transition from the main part of the internal surface 11 and the stepped region.

In use, a user places the container 10 into an appropriate dispensing device (not shown) by any convenient means 34 to allow for the application of pressure to the plunger 18. Pressure applied to the plunger 18 builds hydraulic pressure against the weakened portion 38 through displacement of the liquid 16. Once the hydraulic pressure reaches a critical point the weakened portion 38 breaks and the liquid 16 then enters the main chamber 17. The plunger 18 is then displaced forward again by the dispensing device. This brings the front face 41 of the plunger 18 into close abutting contact with a rear face of the inner wall 36.

The main chamber 17 now contains the liquid 16 and the powder 20. The user then places the dental applicator in an appropriate mixing device such as a vibration mixer. The agitation caused by the mixing device causes the liquid and the powder to mix and combine to form a paste.

After mixing, further forward displacement of the plunger 18 places increasing pressure against the liquid receptacle 14. Once sufficient force is applied the front section of the liquid receptacle 14 breaks away as shown in figure 3. This leaves the side wall 37 of the liquid receptacle 14 substantially intact.

As the plunger 18 is displaced forward slots 46 (see figures 6 and 7) in the interior surface 11 of the main chamber 17 may allow for any air trapped within the container or mixed material to vent into a recess created from the separation of the front part of the liquid receptacle 14 from the side wall 37. Further, it is possible that the mixing process does not fully mix all of the powder components and some residual powder is left behind in, for example, the area between the front part of the liquid receptacle 14 and the internal wall 11 of the body 12. This in practice may cause issues with the area being treated by the dental material becoming contaminated by residual powder component. As the plunger 18 and inner wall 36 move forward the recess is formed behind the inner wall 36. Powder particles that have remained unmixed are able to escape around the front part and into the recess, hence reducing the risk of contamination or exposure of the user of these particles.

Further forward displacement of the plunger 18 will cause the plunger 18 to travel towards the distal end of the body 12 as shown in figure 5. This will lead to increased hydraulic pressure against the frangible membrane 22. Once the hydraulic pressure reaches a critical value the membrane 22 will burst. The paste 28 is thus placed in fluid communication with the nozzle 26. Still further, forward displacement of the plunger 18 will cause the paste to travel through the nozzle 26 before finally being dispensed. However, as discussed above, the presence of the step 50 provides a compression zone which imparts a degree of resistance to further movement of the front part of the receptacle 14 from the position shown in figure 4 to the position shown in figure 5.

Modifications and variations as would be apparent to a skilled addressee are deemed to be within the scope of the present invention.

## Claims

1. A dental container (10) for mixing and dispensing of components of a dental mixture, having a main chamber (17), a dispensing nozzle(26), a liquid receptacle (14) and a plunger (18), wherein the container (10) comprises a body (12) having a proximal end (13a) and a distal end (13), the main chamber (17) being located adjacent the distal end (13) of the body (12), the main chamber (17) having a distal wall (22) which is frangible and forms a seal and the dispensing nozzle (26) being mounted at the distal end (13) of the main chamber (17), the liquid receptacle (14) being mounted within the proximal end (13a) of the body (12), and the plunger (18) being sealingly mounted within an interior of the liquid receptacle (14), the liquid receptacle (14) having an inner transverse wall (36) which contains a weakened portion (38) and wherein the plunger (18) has a front face (41) which is projection free, the liquid receptacle (14) containing a liquid and the main chamber (17) containing a powder, the arrangement being such that, in use, pressure is applied to the plunger (18) to build up hydraulic pressure by means of the liquid on the inner transverse wall (36), so as to break the weakened portion (38) hydraulically and cause the liquid to enter the main chamber (17), and wherein a front portion of the liquid receptacle is arranged to be broken away from the remainder of the liquid receptacle (14) by further depression of the plunger (18) such that the plunger (18) and the broken away portion of the liquid receptacle (14) are able to traverse the entire length of the main chamber (17) to cause dispensation of mixed dental material into the dispensing nozzle (26) by application of hydraulic pressure on the distal wall (22) of the main chamber (17) so as to rupture the distal wall (22), **characterized in that** the main chamber (17) has a compression zone, the compression zone comprises a stepped region (50) of reduced cross-sectional dimension such that limited resistance is imparted to movement of the front portion of the liquid receptacle (14).

2. A container (10) according to claim 1, **characterized in that** the distal end (13) of the body (12) has an annular end cap (24) mounted thereto, the end cap (24) has an aperture and a frangible membrane (22) which forms the frangible distal wall (22), which is mounted between the distal end (13) of the body (12) and the end cap (24).

3. A container according to claim 1 or 2, **characterized in that** the liquid receptacle (14) has an outwardly facing open end and a closed inner end, the plunger (18) being mounted in the open end of the receptacle (14).

4. A container according to any one of claims 1 to 3, **characterized in that** the receptacle (14) has a side wall (37), the side wall (37) being provided with a frangible portion arranged to break upon pressure being applied by the plunger (18).

5. A container according to claim 4, **characterized in that** the main chamber (17) contains a step (62) on an internal surface (11) thereof and the liquid receptacle (14) has an annular recess (64) which initially engages with the step (62), the annular recess (64) forming the frangible portion, such that, in use, upon the plunger (18) being depressed an inner end of the plunger (18) contacts the inner transverse wall (36) and the front portion of the liquid receptacle (14) is broken away at the step (62).

6. A container according to any one of claims 3 to 5, **characterized in that** the body (12) at the proximal end (13a) thereof has an inward facing recess arranged to engage with an outward facing projection on the liquid receptacle (14) so that a rear portion of the liquid receptacle (14) remains stationary relative to the body (12) after the front portion has broken away.

7. A container according to any one of claims 1 to 6, **characterized in that** the stepped region (50) is tapered remote from the distal end (13) of the container (10) so as to provide a relatively smooth transition to the stepped region (50).

## Patentansprüche

1. Zahnmedizinischer Behälter (10) zum Mischen und Abgeben von Komponenten einer zahnmedizinischen Mischung, der eine Hauptkammer (17), eine Abgabetülle (26), ein Flüssigkeitsgefäß (14) und einen Kolben (18) aufweist, wobei der Behälter (10) einen Körper (12) umfasst, der ein proximales Ende (13a) und ein distales Ende (13) aufweist, wobei sich die Hauptkammer (17) benachbart zum distalen Ende (13) des Körpers (12) befindet, wobei die Hauptkammer (17) eine distale Wand (22) aufweist, die zerbrechbar ist und eine Dichtung bildet und die Abgabetülle (26) am distalen Ende (13) der Hauptkammer (17) angebracht ist, wobei das Flüssigkeitsgefäß (14) innerhalb des proximalen Endes (13a) des Körpers (12) angebracht ist, und wobei der Kolben (18) dichtend innerhalb eines Innenraums des Flüssigkeitsgefäßes (14) angebracht ist, wobei das Flüssigkeitsgefäß (14) eine innere Querwand (36) aufweist, die einen geschwächten Abschnitt (38) enthaltend wobei der Kolben (18) eine vordere Fläche (41) aufweist, die frei von Vorsprüngen ist, wobei das Flüssigkeitsgefäß (14) eine Flüssigkeit enthält und die Hauptkammer (17) ein Pulver enthält, wobei die Anordnung derart ist, dass im Gebrauch Druck auf den Kolben (18) ausgeübt wird, um mittels der Flüssigkeit hydraulischen Druck auf die innere Querwand (36) aufzubauen, um so den geschwächten Abschnitt (38) hydraulisch zu zerbrechen und zu bewirken, dass die Flüssigkeit in die Hauptkammer (17) eintritt, und wobei ein vorderer Abschnitt des Flüssigkeitsgefäßes angeordnet ist, vom Rest des Flüssigkeitsgefäßes (14) durch ein weiteres Herunterdrücken des Kolbens (18) so weggebrochen zu werden, dass der Kolben (18) und der weggebrochene Abschnitt des Flüssigkeitsgefäßes (14) in der Lage sind, die gesamte Länge der Hauptkammer (17) zu durchqueren, um eine Abgabe von gemischtem zahnmedizinischem Material in die Abgabetülle (26) durch eine solche Ausübung von hydraulischem Druck auf die distale Wand (22) der Hauptkammer (17) zu bewirken, dass die distale Wand (22) bricht, **dadurch gekennzeichnet, dass** die Hauptkammer (17) eine Kompressionszone aufweist, die Kompressionszone einen gestuften Abschnitt (50) mit verringerter Querschnittsabmessung derart aufweist, dass der Bewegung des vorderen Abschnitts des Flüssigkeitsgefäßes (14) ein beschränkter Widerstand vermittelt wird.

2. Behälter (10) nach Anspruch 1, **dadurch gekennzeichnet, dass** das distale Ende (13) des Körpers (12) eine daran angebrachte ringförmige Endkappe (24) aufweist, die Endkappe (24) weist eine Öffnung und eine zerbrechbare Membran (22) auf, die die zerbrechbare distale Wand (22) bildet, die zwischen dem distalen Ende (13) des Körpers (12) und der Endkappe (24) angebracht ist.

3. Behälter nach Anspruch 1 oder 2, **dadurch gekennzeichnet, dass** das Flüssigkeitsgefäß (14) ein nach außen gewandtes offenes Ende und ein geschlossenes inneres Ende aufweist, wobei der Kolben (18) in dem offenen Ende des Gefäßes (14) angebracht ist.

4. Behälter nach einem der Ansprüche 1 bis 3, **dadurch gekennzeichnet, dass** das Gefäß (14) eine Seitenwand (37) aufweist, wobei die Seitenwand (37) mit einem zerbrechbaren Abschnitt versehen ist, der angeordnet ist, zu zerbrechen, wenn Druck durch den Kolben (18) ausgeübt wird.

5. Behälter nach Anspruch 4, **dadurch gekennzeichnet, dass** die Hauptkammer (17) eine Stufe (62) an einer internen Oberfläche (11) davon enthält und das Flüssigkeitsgefäß (14) eine ringförmige Aussparung (64) aufweist, die anfangs mit der Stufe (62) in Eingriff kommt, wobei die ringförmige Aussparung (64) den zerbrechbaren Abschnitt bildet, derart, dass im Gebrauch, wenn der Kolben (18) heruntergedrückt wird, ein inneres Ende des Kolbens (18) die innere Querwand (36) berührt und der vordere Abschnitt des Flüssigkeitsgefäßes (14) an der Stufe (62) weggebrochen wird.

6. Behälter nach einem der Ansprüche 3 bis 5, **dadurch gekennzeichnet, dass** der Körper (12) am proximalen Ende (13a) davon eine nach innen gewande Aussparung aufweist, die angeordnet ist, mit einem nach außen gerichteten Vorsprung an dem Flüssigkeitsgefäß (14) in Eingriff zu kommen, so dass ein hinterer Abschnitt des Flüssigkeitsgefäßes (14) relativ zu dem Körper (12) ortsfest bleibt, nachdem der vordere Abschnitt weggebrochen ist.

7. Behälter nach einem der Ansprüche 1 bis 6, **dadurch gekennzeichnet, dass** der gestufte Abschnitt (50) sich entfernt vom distalen Ende (13) des Behälters (10) verjüngt, um so einen relativ glatten Übergang zum gestuften Abschnitt (50) bereitzustellen.

## Revendications

1. Réceptacle (10) de dentisterie pour mélanger et distribuer des composants d'un mélange de dentisterie, ayant une chambre principale (17), une buse de distribution (26), un réceptacle (14) pour liquide et un plongeur (18), dans lequel le réceptacle (10) comprend un corps (12) ayant une extrémité proximale (13a) et une extrémité distale (13), la chambre principale (17) étant située adjacente à l'extrémité distale (13) du corps (12), la chambre principale (17) ayant une paroi distale (22) qui est cassable et forme un joint d'étanchéité et la buse de distribution (26) étant montée au niveau de l'extrémité distale (13) de la chambre principale (17), le réceptacle (14) pour liquide étant monté à l'intérieur de l'extrémité proximale (13a) du corps (12), et le plongeur (18) étant monté de manière étanche dans un intérieur du réceptacle (14) pour liquide, le réceptacle (14) pour liquide ayant une paroi transversale intérieure (36) qui contient une partie affaiblie (38) et dans lequel le plongeur (18) a une face avant (41) qui est dépourvue de projection, le réceptacle (14) pour liquide contenant un liquide et la chambre principale (17) contenant une poudre, l'agencement étant tel que, à l'utilisation, une pression est appliquée au plongeur (18) pour accumuler une pression hydraulique au moyen du liquide sur la paroi transversale intérieure (36), de façon à casser la partie affaiblie (38) hydrauliquement et faire pénétrer le liquide dans la chambre principale (17), et dans lequel une partie avant du réceptacle pour liquide est agencée de façon à être séparée par cassure du reste du réceptacle (14) pour liquide par un autre enfoncement du plongeur (18) de telle sorte que le plongeur (18) et la partie séparée par cassure du réceptacle (14) pour liquide sont aptes à traverser la totalité de la longueur de la chambre principale (17) pour une distribution d'une matière mélangée de dentisterie dans la buse de distribution (26) par application d'une pression hydraulique sur la paroi distale (22) de la chambre principale (17) de façon à rompre la paroi distale (22), **caractérisé en ce que** la chambre principale (17) a une zone de compression, la zone de compression comprend une région en marche (50) de dimension réduite en coupe transversale de telle sorte qu'une résistance limitée est impartie à un mouvement de la partie avant du réceptacle (14) pour liquide.

2. Réceptacle (10) selon la revendication 1, **caractérisé en ce que** l'extrémité distale (13) du corps (12) a un bouchon d'extrémité (24) annulaire monté sur celle-ci, le bouchon d'extrémité (24) a une ouverture et une membrane cassable (22) qui forme la paroi distale cassable (22), qui est montée entre l'extrémité distale (13) du corps (12) et le bouchon d'extrémité (24).

3. Réceptacle selon la revendication 1 ou 2, **caractérisé en ce que** le réceptacle (14) pour liquide a une extrémité ouverte faisant face vers l'extérieur et une extrémité intérieure fermée, le plongeur (18) étant monté dans l'extrémité ouverte du réceptacle (14).

4. Réceptacle selon l'une des revendications 1 à 3, **caractérisé en ce que** le réceptacle (14) a une paroi latérale (37), la paroi latérale (37) étant prévue avec une partie cassable agencée pour casser par une pression étant appliquée par le plongeur (18).

5. Réceptacle selon la revendication 4, **caractérisé en ce que** la chambre principale (17) contient une marche (62) sur une surface interne (11) de celle-ci et le réceptacle (14) pour liquide a un évidement annulaire (64) qui s'engage initialement avec la marche (62), l'évidement annulaire (64) formant la partie cassable, de telle sorte que, à l'utilisation, lorsque le plongeur (18) est enfoncé, une extrémité intérieure du plongeur (18) vient en contact avec la paroi transversale intérieure (36) et la partie avant du réceptacle (14) pour liquide est écartée par cassure au niveau de la marche (62).

6. Réceptacle selon l'une des revendications 3 à 5, **caractérisé en ce que** le corps (12) au niveau de l'extrémité proximale (13a) de celui-ci a un évidement faisant face vers l'intérieur agencé pour s'engager avec une projection faisant face vers l'extérieur sur le réceptacle (14) pour liquide de telle sorte qu'une partie arrière du réceptacle (14) pour liquide reste fixe par rapport au corps (12) après que la partie avant a été écartée par cassure.

7. Réceptacle selon l'une des revendications 1 à 6, **caractérisé en ce que** la région en marche (50) diminue à distance de l'extrémité distale (13) du réceptacle (10) de façon à créer une transition relativement régulière pour la région en marche (50).
